# EUROPEAN PATENT APPLICATION

(11) **EP 4 528 850 A1**
(43) Date of publication of application: **26.03.2025**
(21) Application number: 23880199.7
(22) Date of filing: 18.10.2023
(51) Int. Cl.: H01M 4/36, H01M 4/587, H01M 4/583, H01M 4/62, H01M 4/133, H01M 10/052, H01M 4/02

(54) **NEGATIVE ELECTRODE COMPOSITION, PREPARATION METHOD THEREFOR, NEGATIVE ELECTRODE, AND LITHIUM SECONDARY BATTERY COMPRISING SAME**

(30) Priority: 21.10.2022 KR 20220136399; 17.10.2023 KR 20230138819
(71) Applicant: LG Energy Solution, Ltd., Seoul 07335 (KR)
(72) Inventor: LEE, Su Min, Daejeon 34122 (KR); SHIN, Sun Young, Daejeon 34122 (KR); LEE, Yong Ju, Daejeon 34122 (KR); HEO, Bumgi, Daejeon 34122 (KR)
(74) Representative: Hoffmann Eitle
(86) International application number: PCT/KR2023/016088
(87) International publication number: WO 2024/085622

(57) **Abstract**

A negative electrode composition, a negative electrode for a lithium secondary battery including the same, a lithium secondary battery, and a method for preparing the negative electrode composition are provided. The negative electrode composition comprises a silicon carbon composite, a graphite, and a negative electrode conductive material, wherein a BET specific surface area of the silicon carbon composite is larger than a BET specific surface area of the graphite.

## Description

### [Technical Field]

### [Cross-reference to Related Applications]

This application claims priority to and the benefit of Korean Patent Application No. 10-2022-0136399 filed on October 21, 2022, the disclosures of which are incorporated herein by reference in their entirety.

The present disclosure relates to a negative electrode composition, a negative electrode for a lithium secondary battery including the same, a lithium secondary battery, and a method for preparing the negative electrode composition.

### [Background Art]

Recently, with the rapid spread of electronic devices using batteries such as not only mobile phones, notebook computers, and electric vehicles, but also electric tools and vacuum cleaners, the demand for secondary batteries having relatively high capacity and/or high output while being small and light has rapidly increased. In particular, a lithium secondary battery is lightweight and has a high energy density and thus has been in the spotlight as a driving power source for the electronic devices. Accordingly, research and development efforts for improving the performance of the lithium secondary battery have been actively conducted.

In the lithium secondary battery, electric energy is produced by oxidation and reduction reactions when lithium ions are intercalated/deintercalated in a positive electrode and a negative electrode while an organic electrolyte or polymer electrolyte is filled between the positive electrode and the negative electrode which include active materials capable of intercalating and deintercalating the lithium ions.

As a positive electrode active material constituting the positive electrode of the lithium secondary battery, metal oxide such as LiCoO₂, LiMnO₂, LiMn₂O₄ or LiNiO₂ has been used. As a negative electrode active material constituting the negative electrode, metal lithium,a carbon based material such as graphite, or activated carbon, a material such as silicon oxide (SiOx), or the like has been used. Even in the negative electrode active materials, metallic lithium was mainly used in the early stage, but as a charging and discharging cycle progresses, lithium atoms grow on the surface of metallic lithium to damage a separator and damage the battery. Accordingly, recently, carbon-based materials have been mainly used.

As the negative electrode active material of the lithium secondary battery, graphite is mainly used, but since the graphite has a small capacity per unit mass of 372 mAh/g, a high capacity of the lithium secondary battery is difficult to achieve. Accordingly, for the high capacity of the lithium secondary battery, as a non-carbon-based negative electrode material having a higher energy density than graphite, negative electrode materials such as silicon, tin, and oxides thereof have been developed. However, in the case of such a non-carbon-based negative electrode material, although the capacity is large, there are problems of low initial efficiency, large lithium consumption during initial charge and discharge, and large irreversible capacity loss.

In particular, in the case of a silicon-based active material, an excessive volume change is accompanied during the battery driving process. Accordingly, there is a problem in that the life of the battery is reduced.

Accordingly, there has been a demand for the development of a negative electrode capable of effectively improving the life characteristics of the battery even while using a silicon-based negative electrode active material.

### [Detailed Description of the Invention]

### [Technical Problem]

Aspects of the present disclosure relate to a lithium secondary battery, types of active material and conductive material constituting a negative electrode composition, and battery performance provided by the active material having a specific relationship with respect to a BET specific surface area value.

### [Technical Solution]

In one example, the present disclosure provides a negative electrode composition and a negative electrode for a lithium secondary battery including the same, in which the negative electrode composition includes a silicon carbon composite, a graphite, and a negative electrode conductive material. A BET specific surface area of the silicon carbon composite is larger than a BET specific surface area of the graphite.

The graphite includes a natural graphite and an artificial graphite, and a BET specific surface area of the natural graphite is larger than a BET specific surface area of the artificial graphite.

In another example, the present disclosure provides a lithium secondary battery including the negative electrode and a method for preparing the negative electrode composition.

In still another example, the present disclosure provides a battery module and a battery pack including the lithium secondary battery.

### [Advantageous Effects]

According to yet another example of the present disclosure, when a silicon-based active material, which is a high-capacity material, is used as the negative electrode composition to manufacture a high-capacity battery, it is possible to improve the problem of life reduction of conventional secondary batteries, enable rapid charging, and have excellent electrode adhesion by satisfying a correlation between the BET specific surface areas of the silicon carbon composite and the graphite.

The silicon carbon composite, the graphite, and the single-walled carbon nanotube (SWCNT) as the conductive material included in the negative electrode composition described above are used together to improve the conductive paths between the negative electrode active material particles, thereby improving the capacity, efficiency, and life performance of the battery.

### [DETAILED DESCRIPTION]

Hereinafter, the present disclosure will be described in more detail to help the understanding of the present disclosure.

Terms and words used in the present disclosure and claims should not be interpreted as being limited to typical or dictionary meanings, but should be interpreted as meanings and concepts which comply with the technical spirit of the present disclosure.

Terms used in the present disclosure are used only to describe illustrative examples, and are not intended to limit the present disclosure. The singular expression includes the plural expression unless the context clearly dictates otherwise.

In the present disclosure, it should be understood that term "comprising", "including" or "having" indicates that there is a feature, a number, a step, a component, or a combination thereof which is implemented, but does not exclude a possibility of presence or addition of one or more other features, numbers, steps, components, or combinations thereof, in advance.

It will be understood that when a certain part such as a layer and the like is disposed "above" or "on" the other part, the part is disposed "directly on" the other element or other intervening elements may also be present. In contrast, when it is described that a certain part is disposed "directly on" the other part, it means that there is no other part therebetween. In addition, being "above" or "on" a reference part means to be located above or on the reference part, and does not necessarily mean to be located "above" or "on" the reference part in an opposite direction to gravity.

In the present disclosure, a "specific surface area" is measured by a BET method, which may be measured by degassing for 2 hours at 130°C using a BET measuring device (BEL-SORP-mini, Nippon Bell) for a measured object and performing N₂ adsorption/desorption at 77 K. That is, in the present disclosure, the BET specific surface area may mean a specific surface area of the particle itself measured by the measurement method.

In the present disclosure, an average length or diameter of a conductive material may be measured using SEM or TEM.

In the present disclosure, a "pore size" may mean the size of the pores of the particle itself, and may be measured by a calculation formula according to a Barrett-Joyer-Halenda (BJH) method through a nitrogen adsorption method. A pore area according to the pore size was derived using a BELSORP-mini II model from BEL Japan, and the size of the pore having the largest pore area was used as a representative. The BJH method may be used, and in a plot of the measured values, an X axis represents a pore diameter (Dp/nm) and a Y axis represents dVp/dDp (cm³g⁻¹nm⁻¹).

In the present disclosure, a "pore volume" may mean the volume of the pores of the particle itself, and may be measured by a calculation formula according to an adsorption/desorption isotherm method through nitrogen adsorption method. An N₂ adsorption/desorption isotherm graph was derived using a BELSORP-mini II model of BEL Japan, and the volume of a place having the highest P/P₀ (close to 1) in adsorption was used as a representative. The adsorption/desorption isotherm method may be used, and in a plot of the measured values, an X axis represents a pressure (P/P₀) and a Y axis represents Va/cm³(STP)g⁻¹.

### Negative electrode composition

A negative electrode composition according to an example of the present disclosure includes a silicon carbon composite; a graphite and a negative electrode conductive material, in which a BET specific surface area of the silicon carbon composite is larger than a BET specific surface area of the graphite.

When a correlation between the BET specific surface areas of the silicon carbon composite and the graphite is satisfied, it is possible to improve a life of a secondary battery, enable rapid charging and have excellent electrode adhesion.

In one example, the graphite includes at least one of a natural graphite and an artificial graphite, and a BET specific surface area of the natural graphite is larger than a BET specific surface area of the artificial graphite when the graphite includes both the natural graphite and the artificial graphite. The graphite may include only the natural graphite, or it may include only the artificial graphite. Preferabley, the graphite includes both the natural graphite and the artificial graphite.

Compared to the case where an artificial graphite has a larger BET specific surface area than a natural graphite, when an artificial graphite has a smaller BET specific surface area than a natural graphite, equivalent or better electrode adhesion can be obtained even when a smaller amount of binder is used.

Since an artificial graphite has relatively higher binder consumption than a natural graphite, when the artificial graphite has a smaller BET specific surface area than the natural graphite, an effect of improving electrode adhesion may be exhibited.

In addition, since the silicon carbon composite has relatively low reactivity with lithium ions, it is advantageous that the BET specific surface area of the silicon carbon composite is larger than that of the natural graphite for smooth intercalation and deintercalation of lithium ions.

Therefore, by satisfying the relationship of the above BET specific surface area, electrode adhesion is improved when using an equivalent amount of binder, and smooth intercalation and deintercalation of lithium ions are improved, thereby improving lifespan characteristics and rapid charging performance of the secondary battery.

According to an example of the present disclosure, the BET specific surface area of the silicon carbon composite is greater than the BET specific surface area of the natural graphite by 1 m²/g to 9 m²/g.

Since the electrical conductivity of silicon is lower than that of graphite, the reactivity of the silicon-carbon composite with lithium ions is relatively low. Therefore, when the BET specific surface area corresponding to the reaction area of the silicon carbon composite is greater than that of natural graphite within the above range, it is advantageous for smooth intercalation and deintercalation of lithium ions.

The BET specific surface area of the silicon carbon composite may be greater than the BET specific surface area of the natural graphite by 1.2 m²/g or more, 1.5 m²/g or more, 1.7 m²/g or more, or 1.9 m²/g or more. The BET specific surface area of the silicon carbon composite may be greater than the BET specific surface area of the natural graphite by 8.7 m²/g or less, 8.4 m²/g or less, 8.2 m²/g or less, or 8 m²/g or less.

According to an example of the present disclosure, the BET specific surface area of the silicon carbon composite is greater than the BET specific surface area of the artificial graphite by 2 m²/g to 10 m²/g.

Since the electrical conductivity of silicon is lower than that of graphite, it is advantageous for smooth intercalation and deintercalation of lithium ions when the BET specific surface area corresponding to the reaction area of the silicon-carbon composite is greater than that of artificial graphite within the above range.

The BET specific surface area of the silicon carbon composite may be greater than the BET specific surface area of the artificial graphite by 2.2 m²/g or more, 2.5 m²/g or more, 2.7 m²/g or more, or 2.9 m²/g or more.

The BET specific surface area of the silicon carbon composite may be greater than the BET specific surface area of the artificial graphite by 9.7 m²/g or less, 9.4 m²/g or less, 9.2 m²/g or less, or 9 m²/g or less.

According to an example of the present disclosure, the BET specific surface area of the natural graphite is greater than the BET specific surface area of the artificial graphite by 0.1 m²/g to 2 m²/g.

Within this range, when the BET specific surface area of natural graphite is large, the BET specific surface area of artificial graphite having a relatively large binder consumption is relatively small, so when using an equivalent amount of binder, an effect of improving electrode adhesion can be exhibited.

The BET specific surface area of the natural graphite may be greater than the BET specific surface area of the artificial graphite by 0.2 m²/g or more, or 0.3 m²/g or more. The BET specific surface area of the natural graphite may be greater than the BET specific surface area of the artificial graphite by 1.9 m²/g or less, 1.8 m²/g or less, or 1.7 m²/g or less.

The natural graphite has a BET specific surface area of 1.5 m²/g or more and 3.5 m²/g or less, which may improve electrode adhesion. The artificial graphite and the silicon carbon composite affect rapid charging and life performance, and the BET specific surface areas thereof are 0.1 m²/g or more and 2.5 m²/g or less, and 3 m²/g or more and 15 m²/g or less, respectively.

When the artificial graphite has a larger BET specific surface area than that of the natural graphite, a large amount of binder in the electrode is consumed when the electrode is manufactured with the negative electrode composition, thereby reducing electrode adhesion. In addition, when the BET specific surface area of the silicon carbon composite is smaller than the BET specific surface area of the natural graphite, intercalation and/or deintercalation of lithium in the silicon carbon composite becomes difficult, so that life performance and rapid charging performance may be deteriorated.

In the present disclosure, the silicon carbon composite is a composite of Si and C, and Si and C (graphite) exist separately. For example, each of Si and C peaks can be observed by elemental analysis methods such as XRD, NMR and the like. In the present disclosure, the silicon carbon composite may be denoted as Si/C. The silicon carbon composite may consist of Si and C that are not bonded to each other, but may contain additional components as needed. For example, the silicon carbon composite may or may not include silicon carbide, denoted as SiC. When the silicon carbon composite contains silicon carbide, the content is 3% by weight or less. The silicon carbon composite may exist in a crystalline state, amorphous state, or a mixture thereof. According to an example, C in the silicon carbon composite may exist in an amorphous state.

According to one example, the silicon carbon composite may be a composite of silicon and graphite, and may have a structure surrounded by graphene or amorphous carbon, etc., around a core composite of silicon and graphite. In the silicon carbon composite, silicon may be nano silicon.

According to one example, the silicon carbon composite comprises porous carbon-based particles and silicon located on the surface or in internal pores of the porous carbon-based particles.

According to one example, the silicon carbon composite may be manufactured by a method comprising forming silicon on the surface and in internal pores of porous carbon-based particles.

The porous carbon-based particles can be manufactured using methods known in the art, for example, by carbonizing organic materials, such as petroleum-based materials, polymers, etc., or by chemically treating and then carbonizing materials in the natural world, such as palm tree bark, etc. As another example, the porous carbon-based particles can be obtained by a method including the step of etching carbon-based particles containing internal pores to expand the internal pores of the carbon-based particles.

The step of expanding the internal pores of the carbon-based particles may be performed under a nitrogen (N₂) atmosphere, an oxygen (O₂) atmosphere, or an air atmosphere. The flow rate of the oxygen (O₂) or the air (air) containing the oxygen may be controlled at 0.1 to 10 L/min.

The step of expanding the internal pores of the carbon-based particles may be performed at a temperature range of 400 to 1200° C. for 30 minutes to 4 hours.

Depending on the conditions for expanding the internal pores of the carbon-based particles, the pore characteristics of the obtained porous carbon-based particles may vary.

The step of forming silicon may be performed using a chemical vapor deposition method. At this time, silicon nanoparticles are deposited on the surface and/or in internal pores of the carbon-based particles with expanded internal pores, forming silicon in the form of a film, an island, or a mixture thereof.

The silicon nanoparticles may be crystalline, quasi+crystalline, amorphous, or a combination thereof.

According to a further another example of the present disclosure, the negative electrode composition may include a graphite, and the graphite may include a natural graphite and an artificial graphite.

According to an example, the natural graphite may satisfy the specific surface area relationship. In addition, the natural graphite may satisfy the above-said conditions while having a circularity of 0.7 or more, or 0.9 or more.

In the present disclosure, the circularity may be a value obtained by dividing the circumference of a circle having the same area as a projected image when the particles are projected by a perimeter of the projected image, and specifically, may be represented by Equation 1 below. The circularity may be obtained from an SEM image, and alternatively, may be measured using a particle shape analyzer, for example, a particle shape analyzer such as sysmex FPIA3000 manufactured by Malvern **Co.,** Ltd. In addition, it is possible to confirm a crystal size through XRD analysis. Circularity = circumference of circle with the same area as image on which particles are projected/perimeter of projected image

The natural graphite refers to naturally produced graphite, and examples thereof may include scaled graphite, scaledly graphite, or soil graphite. The natural graphite has advantages of being abundant, having a low price, high theoretical capacity and compaction density, and realizing high output.

The natural graphite may be applied by selecting particles that satisfy the circularity through a method of confirming a particle shape through SEM and confirming the particle shape through a particle shape analyzer.

According to an example, the artificial graphite may satisfy the specific surface area relationship. In addition, the artificial graphite may be artificial graphite satisfying the conditions while the circularity may be 0.95 or less, or 0.9 or less.

The artificial graphite may be applied by selecting particles that satisfy the circularity through a method of confirming a particle shape through SEM and confirming the particle shape through a particle shape analyzer.

The above-described silicon carbon composite, natural graphite, and artificial graphite have a particle form. The average particle diameter (D50) of the silicon carbon composite may be 1 *µ*m or more, for example, 1 *µ*m or more and 15 *µ*m or less, 2 *µ*m or more and 14 *µ*m or less, or 3 *µ*m or more and 13 *µ*m or less. When the average particle diameter (D50) of the silicon carbon composite is in the range of 1 *µ*m or more and 15 *µ*m or less, the volume expansion and contraction rate due to charging and discharging are reduced, and the lifespan performance can be improved. In addition, by preventing excessive increase in specific surface area, lifespan performance can be improved by preventing side reactions with the electrolyte as the cycle progresses. The average particle diameter (D50) of each of the natural graphite and artificial graphite is not particularly limited, but may be 1 *µ*m or more, for example, 1 *µ*m or more and 35 *µ*m or less, 3 *µ*m or more and 30 *µ*m or less, or 5 *µ*m or more and 25 *µ*m or less.

In the present disclosure, "average particle diameter (D50)" may be defined as a particle diameter corresponding to 50% of the volume cumulative amount in a particle diameter distribution curve of the particles. The average particle diameter (D50) may be measured using, for example, a laser diffraction method. The laser diffraction method can generally measure a particle diameter of about several mm from the submicron region, and results with high reproducibility and high resolution may be obtained.

The measurement of the average particle diameter (D50) may be confirmed using water and Triton-X100 dispersant using a Microtrac apparatus (manufacturer: Microtrac model name: S3500). The average particle diameter (D50) of the positive electrode active material may be measured in a range of a refractive index of 1.5 to 1.7, and the negative electrode active material may be measured under the condition of a refractive index of 1.97 or 2.42. For example, after particles are dispersed in a dispersion medium, the resulting dispersion is introduced into a commercially available laser diffraction particle size measuring device to irradiate the dispersion with an ultrasonic wave of about 28 kHz with an output of 60 W, then a volume cumulative particle size distribution graph is obtained, and then the average particle diameter may be measured by obtaining the particle size corresponding to 50% of the volume cumulative amount.

According to an additional example of the present disclosure, the negative electrode conductive material may include a single-walled carbon nanotube (SWCNT). The single-walled carbon nanotube (SWCNT) refers to a carbon structure in the form of a tube including a single carbon layer. When the conductive material in the negative electrode composition includes the single-walled carbon nanotube (SWCNT), the charge/discharge capacity and/or life performance of the battery may be improved. Since the single-walled carbon nanotube (SWCNT) connects conductive paths between the particles well, it is possible to prevent the loss of the conductive path due to the swelling of the silicon-based negative electrode active material described above. As a result, when the single-walled carbon nanotube (SWCNT) is included, the life performance of the battery may be improved.

In one example, the negative electrode composition may include an additional conductive material other than the single-walled carbon nanotube. For example, a carbon black, multi-walled carbon nanotube (MWCNT), and etc. may be included as the additional conductive material.

In the present disclosure, a length of the carbon nanotube means a length of the major axis passing through the center of a unit body of the carbon nanotube, and a diameter of the carbon nanotube means a length of the minor axis passing through the center of the unit body and perpendicular to the major axis.

An average length of the single-walled carbon nanotube (SWCNT) may be 0.1 µm to 50 µm, 0.5 µm to 25 µm or 0.5 µm to 20 µm. The average length may be 5 µm to 15 µm. The lower limit of the average length may be 0.1 µm, 0.5 µm, 1 µm, 2 µm, 3 µm, 4 µm, 5 µm, 6 µm, 7 µm or 8 µm, and the upper limit thereof may be 50 µm, 30 µm, 25 µm, 20 µm, 15 µm, 14 µm, 13 µm, 12 µm, 11 µm or 10 µm.

When the single-walled carbon nanotube (SWCNT) having the above-said average length are used together with the silicon carbon composite and the graphite, the conductive paths between the particles may be more easily connected, so that the electrical conductivity, strength, and/or electrolyte storage retention rate of the negative electrode may be improved. On the other hand, when the length of the carbon nanotube is short, it is difficult to efficiently form the conductive path, so that electrical conductivity may be lowered, and when the length of the carbon nanotube is long, the dispersibility may be lowered.

The average length of the single-walled carbon nanotube (SWCNT) may be calculated as an average value of the results observed by SEM.

An average diameter of the single-walled carbon nanotube (SWCNT) may be 1 nm to 20 nm, and in some examples, may be 1.5 nm to 15nm. In other examples, the average diameter may be 1.5 nm to 5 nm. The lower limit of the average diameter may be 1 nm, 1.5 nm or 2 nm, and the upper limit thereof may be 20 nm, 18 nm, 16 nm, 14 nm, 12 nm, 10 nm, 8 nm, 6 nm or 4 nm.

Since the single-walled carbon nanotube (SWCNT) satisfying the range has a flexible property, even when the SWCNT is physically damaged, there is an effect that the contact between the negative electrode active material particles is not easily broken. On the other hand, if the diameter of the carbon nanotube (SWCNT) is too large, the electrode density may be decreased, and if the diameter of the carbon nanotube (SWCNT) is too small, dispersion may be difficult and the processibility for preparing a dispersion solution may be reduced.

The average diameter of the single-walled carbon nanotube (SWCNT) may be calculated as an average value observed by TEM.

The BET specific surface area of the single-walled carbon nanotube may be 200 m²/g to 2,000 m²/g, in some examples, may be 250 m²/g to 1,500 m²/g. In the case of using the single-walled carbon nanotube (SWCNT) satisfying the range, dispersion is easy even using a small amount of conductive material, and thus particles may be effectively contacted.

The single-walled carbon nanotube (SWCNT) may be included in an amount of 0.01 part by weight to 5 parts by weight based on 100 parts by weight of the negative electrode composition, specifically, in an amount of 0.01 part by weight to 4 parts by weight, 0.01 part by weight to 3 parts by weight, 0.01 part by weight to 2 parts by weight, 0.01 part by weight to 1 part by weight, or 0.05 part by weight to 0.5 part by weight.

When the above-said amount range is satisfied, it is possible to facilitate the connection of the conductive paths between the silicon-based negative electrode active material particles including the silicon carbon composite and graphite.

According to an additional example of the present disclosure, the BET specific surface area of the silicon carbon composite is larger than a BET specific surface area of the natural graphite, and the BET specific surface area of the natural graphite is larger than a BET specific surface area of the artificial graphite.

According to an example, the specific surface area is measured by a BET method including degassing for 2 hours at 130°C using a BET measuring device (BEL-SORP-mini, Nippon Bell) for a measured object and performing N₂ adsorption/desorption at 77 **K.** That is, in the present disclosure, the BET specific surface area may mean a specific surface area of the particle itself measured by the measurement method.

According to an example, the negative electrode conductive material may include single-walled carbon nanotube (SWCNT).

According to the example of the present disclosure, in the case of the negative electrode composition, since the silicon-based active material, which is a high-capacity material, is used to manufacture a high-capacity battery to include the silicon carbon composite, the natural graphite, the artificial graphite, and the single-walled carbon nanotube (SWCNT) with the contents described above and satisfy a correlation between the BET specific surface areas of the silicon carbon composite, the natural graphite and the artificial graphite, it is possible to improve the life reduction of conventional secondary batteries, enable rapid charging, and have excellent electrode adhesion.

The silicon carbon composite, the graphite, and the single-walled carbon nanotube (SWCNT) as the conductive material included in the negative electrode composition with the contents described above are used together to improve the conductive paths between the negative electrode active material particles, thereby improving the capacity, efficiency, and life performance of the battery.

In an example of the present disclosure, there is provided the negative electrode composition in which a total pore volume of the silicon carbon composite is equal to or larger than a total pore volume of the natural graphite, and the total pore volume of the natural graphite is equal to or larger than a total pore volume of the artificial graphite.

The pore volume, on the same principle as the BET specific surface area described above, can affect the improvement of electrode adhesion and the smooth intercalation and deintercalation of lithium ions. That is, when the pore volume of natural graphite is equal to or greater than that of artificial graphite, the amount of binder consumed can be relatively reduced, and thus electrode adhesion can be improved by using the same amount of binder. In addition, when the pore volume of the silicon carbon composite is equal to or greater than that of natural graphite, it is advantageous for life performance and rapid charging performance by smoothly intercalation and deintercalation of lithium ions in the silicon carbon composite.

According to an additional example of the present disclosure, the silicon carbon composite, the natural graphite, and the artificial graphite in the negative electrode composition may include pores.

According to an example, the pore volume may mean the volume of the pores of the particle itself, and may be measured by a calculation formula according to an adsorption/desorption isotherm method through nitrogen adsorption method. Specifically, an N₂ adsorption/desorption isotherm graph was derived using a BELSORP-mini II model of BEL Japan, and the volume of a place having the highest P/P₀ (close to 1) in adsorption was used as a representative. The adsorption/desorption isotherm method may be used, and in a plot of the measured values, an X axis represents a pressure (P/P₀) and a Y axis represents Va/cm³ (STP) g⁻¹.

According to an example, the pore volume of the silicon carbon composite is 4~11 cm³/g, the pore volume (total pore V.) of the natural graphite may be 2~8 cm³/g, and the pore volume (total pore V.) of the artificial graphite is 0.1~4 cm³/g.

The pore volume of the silicon carbon composite may be 1 cm³/g to 8 cm³/g larger than the pore volume of the natural graphite.

The pore volume of the silicon carbon composite may be the same as the pore volume of the natural graphite.

The pore volume of the silicon carbon composite may be 4 cm³/g to 11 cm³/g larger than the pore volume of the artificial graphite.

The pore volume of the natural graphite may be 1 cm³/g to 6 cm³/g larger than the pore volume of the artificial graphite.

The pore volume of the natural graphite may be the same as the pore volume of the artificial graphite.

When the pore volumes of the silicon carbon composite, the natural graphite, and the artificial graphite satisfy the ranges, it is possible to improve the reduction in the life of the secondary battery, enable rapid charging, and have excellent electrode adhesion.

In an example of the present disclosure, there is provided the negative electrode composition in which the number (pore intensity) of pores having sizes of 2 nm or more and 200 nm or less of the silicon carbon composite is equal to or larger than that of the natural graphite, and that of the natural graphite is equal to or larger than that of the artificial graphite.

According to an example, the pore size may mean the size of the pores of the particle itself, and may be measured by a calculation formula according to a Barrett-Joyer-Halenda (BJH) method through a nitrogen adsorption method. Specifically, a pore area according to the pore size was derived using a BELSORP-mini II model from BEL Japan, and the size of the pore having the largest pore area was used as a representative. The BJH method may be used, and in a plot of the measured values, an X axis represents a pore diameter (Dp/nm) and a Y axis represents dVp/dDp (cm³g⁻¹nm⁻¹).

When the above range is satisfied, it is possible to improve a decrease in the life of the secondary battery, enable rapid charging, and have excellent electrode adhesion.

In an example of the present disclosure, there is provided the negative electrode composition in which the natural graphite has a BET specific surface area of 1.5 m²/g or more and 3.5 m²/g or less, and the artificial graphite has a BET specific surface area of 0.1 m²/g or more and 2.5 m²/g or less.

The natural graphite may have the BET specific surface area of 1.5 m²/g or more and 3.5 m²/g or less, 1.5 m²/g or more and 3.3 m²/g or less, 1.5 m²/g or more and 3 m²/g or less, 1.5 m²/g or more and 2.8 m²/g or less, or 1.5 m²/g or more and 2.5 m²/g or less.

The artificial graphite may have the BET specific surface area of 0.1 m²/g or more and 2.2 m²/g or less, 0.1 m²/g or more and 2 m²/g or less, 0.1 m²/g or more and 1.8 m²/g or less, 0.1 m²/g or more and 1.5 m²/g or less, or 0.3 m²/g or more and 2.5 m²/g or less.

When the natural graphite and artificial graphite satisfy the BET specific surface area ranges, the negative electrode composition includes two types of graphite having different specific surface areas other than the silicon carbon composite, and the silicon carbon composite is used as the negative electrode active material. Accordingly, it is possible to improve the problem of a decrease in the life of the negative electrode and the secondary battery which may be caused by a large volume change in silicon-based particles even while having characteristics of an increased battery capacity and an excellent output property at a high C-rate.

The natural graphite may improve the electrode adhesion in the BET specific surface area range, and the artificial graphite may affect rapid charging and life performance in the BET specific surface area range. In addition, when the artificial graphite has a larger BET specific surface area than that of the natural graphite, a large amount of binder in the electrode is consumed when the electrode is manufactured with the negative electrode composition, thereby reducing electrode adhesion.

In an example of the present disclosure, there is provided the negative electrode composition in which the negative electrode conductive material includes the single-walled carbon nanotube (SWCNT), and based on 100 parts by weight of the total content of the silicon carbon composite, the graphite, and the single-walled carbon nanotube in the negative electrode composition, the silicon carbon composite is included in an amount of 0.5 part by weight to 50 parts by weight; the graphite is included in an amount of 45 parts by weight to 99 parts by weight; and the single-walled carbon nanotube (SWCNT) is included in an amount of 0.01 part by weight to 5 parts by weight, and based on 100 parts by weight of the graphite, the natural graphite is included in an amount of 10 parts by weight to 70 parts by weight; and the artificial graphite is included in an amount of 30 parts by weight to 90 parts by weight.

According to an additional example of the present disclosure, the negative electrode composition includes a silicon carbon composite; graphite and a negative electrode conductive material, and the graphite may include natural graphite and artificial graphite, and the negative electrode conductive material may include single-walled carbon nanotube (SWCNT).

According to an additional example of the present disclosure, based on 100 parts by weight of the total content of the silicon carbon composite, the graphite, and the single-walled carbon nanotube in the negative electrode composition, the silicon carbon composite may be included in an amount of 0.5 part by weight to 50 parts by weight; the graphite may be included in an amount of 45 parts by weight to 99 parts by weight; and the single-walled carbon nanotube (SWCNT) may be included in an amount of 0.01 part by weight to 5 parts by weight.

According to an example, based on 100 parts by weight of the total content of the silicon carbon composite, the graphite, and the single-walled carbon nanotube in the negative electrode composition, the silicon carbon composite may be included in an amount of 1 part by weight to 40 parts by weight, 2 parts by weight to 30 parts by weight, 3 parts by weight to 20 parts by weight, 4 parts by weight to 10 parts by weight, or 5 parts by weight to 10 parts by weight. The graphite may be included in an amount of 50 parts by weight to 99 parts by weight, 55 parts by weight to 99 parts by weight, 60 parts by weight to 99 parts by weight, 65 parts by weight to 99 parts by weight, 70 parts by weight to 99 parts by weight, or 75 parts by weight to 95 parts by weight. The single-walled carbon nanotube (SWCNT) may be included in an amount of 0.01 part by weight to 4 parts by weight, 0.01 part by weight to 3 parts by weight, 0.01 part by weight to 2 parts by weight, 0.01 part by weight to 1 part by weight, or 0.05 part by weight to 0.5 part by weight.

According to an additional example of the present disclosure, based on 100 parts by weight of the graphite, the natural graphite may be included in an amount of 10 to 70 parts by weight; and the artificial graphite may be included in an amount of 30 to 90 parts by weight.

According to an example, based on 100 parts by weight of the graphite, the natural graphite may be included in an amount of 11 to 68 parts by weight; and the artificial graphite may be included in an amount of 32 to 89 parts by weight.

In the content range of the negative electrode composition, when the content range of the silicon carbon composite is satisfied, the capacity characteristics may be improved, when the content range of graphite is satisfied, rapid charging performance and negative electrode adhesion may be improved, and when the content range of the single-walled carbon nanotube (SWCNT) is satisfied, the efficiency and life performance of the battery may be improved. Accordingly, it is possible to improve the life reduction of the secondary battery, and to have an excellent output property at a high C-rate due to many chargeable and dischargeable points.

In an example of the present disclosure, there is provided a negative electrode composition further comprising a binder.

The binder may serve to improve adhesion between negative electrode active material particles and adhesion between the negative electrode active material particles and a negative electrode current collector. The binder may be a negative electrode binder. The negative electrode binder may use binders known in the art, and non-limiting examples may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, poly acrylic acid and materials in which hydrogens thereof are substituted with Li, Na or Ca, and also include various copolymers thereof.

The binder may be included in an amount of 10% or less based on 100 parts by weight of the negative electrode composition, preferably 1% to 5%. For example, the binder may be included in an amount of 9% or less, 8% or less, 7% or less, 6% or less, or 5% or less based on 100 parts by weight of the negative electrode composition. The binder may be included in an amount of 0.5% or more, or 1% or more based on 100 parts by weight of the negative electrode composition.

### Method for preparing negative electrode composition

An example of the present disclosure provides a method for preparing a negative electrode composition including forming a first mixture by adding water to a negative electrode conductive material and mixing; and forming a second mixture by mixing a silicon carbon composite and a graphite with the first mixture, in which a BET specific surface area of the silicon carbon composite is larger than a BET specific surface area of the graphite.

According to an additional example of the present disclosure, the method of preparing the negative electrode composition may include mixing the silicon carbon composite and the graphite together with the negative electrode conductive material.

In one example, the graphite includes at least one of a natural graphite and an artificial graphite, and a BET specific surface area of the natural graphite is larger than a BET specific surface area of the artificial graphite when the graphite includes both the natural graphite and the artificial graphite. Preferably, the graphite includes both the natural graphite and the artificial graphite.

In an example of the present disclosure, there is provided the method for preparing the negative electrode composition in which the negative electrode conductive material includes single-walled carbon nanotube (SWCNT), and based on 100 parts by weight of the total content of the silicon carbon composite, the graphite, and the single-walled carbon nanotube in the negative electrode composition, the silicon carbon composite is included in an amount of 0.5 to 50 parts by weight; the graphite is included in an amount of 45 to 99 parts by weight; and the single-walled carbon nanotube (SWCNT) is included in an amount of 0.01 to 5 parts by weight, and based on 100 parts by weight of the graphite, the natural graphite is included in an amount of 10 to 70 parts by weight; and the artificial graphite is included in an amount of 30 to 90 parts by weight.

In an example of the present disclosure, the BET specific surface area of the silicon carbon composite is larger than the BET specific surface area of the natural graphite by 1 m²/g to 9 m²/g, the BET specific surface area of the silicon carbon composite is larger than the BET specific surface area of the artificial graphite by 2 m²/g to 10 m²/g, and the BET specific surface area of the natural graphite is larger than the BET specific surface area of the artificial graphite by 0.1 m²/g to 2 m²/g.

In the example of the present disclosure, the BET specific surface areas and pore volumes of the silicon carbon composite, the natural graphite, and the artificial graphite are the same as those described above in the negative electrode composition.

### Negative electrode

An example of the present disclosure provides a negative electrode for a lithium secondary battery including a current collector; and a negative electrode active material layer including the above-described negative electrode composition formed on one or both surfaces of the current collector.

According to an additional example of the present disclosure, the current collector is a negative electrode current collector, which is not particularly limited as long as the current collector has conductivity without causing a chemical change in the corresponding battery. For example, as the current collector, copper, stainless steel, aluminum, nickel, titanium, calcined carbon, aluminum or stainless steel surface-treated with carbon, nickel, titanium, silver, etc., and the like may be used. A transition metal that easily adsorbs carbon, such as copper or nickel, may be used as the current collector. The thickness of the current collector may be 1 µm to 500 µm, but the thickness of the current collector is not limited thereto.

According to an additional example of the present disclosure, the negative electrode active material layer including the negative electrode composition according to the above-described example may be formed on one or both surfaces of the current collector. According to an example, the thickness of the negative electrode active material layer may be 20 µm or more and 500 µm or less.

According to an additional example of the present disclosure, the negative electrode for the lithium secondary battery may be manufactured according to a conventional method for manufacturing the negative electrode. The negative electrode composition including the electrode active material, the electrode conductive material, and optionally, the binder may be coated on the current collector, and then dried and rolled to manufacture the negative electrode. In this case, the types and contents of the negative electrode active material, the negative electrode conductive material, and the binder are the same as those described above.

The solvent may be a solvent generally used in the art, and may include dimethyl sulfoxide (DMSO), isopropyl alcohol, N-methylpyrrolidone (NMP), acetone, water, or the like, and may be used with one type alone or a mixture of two or more thereof. The amount of the solvent used is enough so long as it allows to have a viscosity capable of showing excellent thickness uniformity when applied for manufacturing the negative electrode after dissolving or dispersing the negative electrode active material, the negative electrode conductive material and the binder in consideration of the application thickness of the slurry and the production yield. Alternatively, as another method, the negative electrode may also be manufactured by casting the negative electrode composition on a separate support and then laminating a film peeled from the support on a current collector.

### Lithium secondary battery

In an example of the present disclosure, there is provided a lithium secondary battery including a positive electrode; the negative electrode for the lithium secondary battery according to one or more of the examples described above; and a separator between the positive electrode and the negative electrode.

According to an additional example of the present disclosure, the negative electrode is the same as the negative electrode according to the above-described example. Since the negative electrode has been described above, a detailed description thereof will be omitted.

According to an additional example of the present disclosure, the positive electrode includes a positive electrode current collector, and a positive electrode active material layer including a positive electrode composition formed on the current collector. The current collector may be a positive electrode current collector.

According to an example, the positive electrode may include a positive electrode current collector and a positive electrode active material layer formed on the positive electrode current collector and including the positive electrode composition. The positive electrode composition may include a positive electrode active material.

In the positive electrode, the positive electrode current collector is not particularly limited as long as it has conductivity without causing a chemical change in the battery, and for example, stainless steel, aluminum, nickel, titanium, calcined carbon or aluminum or stainless steel surface-treated with carbon, nickel, titanium, silver, etc. may be used. In addition, the positive electrode current collector may have a thickness of typically 3 to 500 µm, and fine unevenness may be formed on the surface of the current collector to increase the adhesion of the positive electrode active material. For example, the positive electrode current collector may be used in various forms, such as a film, a sheet, a foil, a net, a porous body, a foam, and a non-woven body.

According to an example, the thickness of the negative electrode active material layer may be 20 µm or more and 500 µm or less, and the thickness of the positive electrode active material layer may be 90% to 110%, for example, 95% to 105% of the thickness of the negative electrode active material layer. In addition, the thicknesses thereof may be the same.

The positive electrode active material may be a commonly used positive electrode active material. Specifically, the positive electrode active material may include layered compounds such as lithium cobalt oxide (LiCoO₂) and lithium nickel oxide (LiNiO₂), or compounds substituted with one or more transition metals; lithium iron oxides such as LiFe₃O₄; lithium manganese oxides of Chemical Formula Li_{1+c1}Mn_{2-c1}O₄ (0 ≤ c1 ≤ 0.33), such as LiMnO₃, LiMn₂O₃, LiMnO₂, etc.; lithium copper oxide (Li₂CuO₂); vanadium oxides such as LiV₃O₈, V₂O₅, and Cu₂V₂O₇; Ni site-type lithium nickel oxides represented by Chemical Formula LiNi_{1-c2}M_{c2}O₂ (wherein, M is at least one selected from the group consisting of Co, Mn, Al, Cu, Fe, Mg, B and Ga, and satisfies 0.01 ≤ c2 ≤ 0.3); lithium-manganese composite oxides represented by Chemical Formula LiMn_{2-c3}M_{c3}O₂ (wherein, M is at least one selected from the group consisting of Co, Ni, Fe, Cr, Zn, and Ta, and satisfies 0.01 ≤ c3 ≤ 0.1) or Li₂Mn₃MO₈ (wherein, M is at least one selected from the group consisting of Fe, Co, Ni, Cu, and Zn.); LiMn₂O₄ in which part of Li in Chemical Formula is substituted with alkaline earth metal ions; and the like, but is not limited thereto. The positive electrode may also be Li-metal.

The positive electrode active material layer may include a positive electrode conductive material and a positive electrode binder together with the positive electrode active material described above.

In this case, the positive electrode conductive material is used to impart conductivity to the electrode, and in the configured battery, it can be used without any particular limitation as long as the positive electrode conductive material has electronic conductivity without causing a chemical change. As a specific example, the positive electrode conductive material may include graphite such as natural graphite and artificial graphite; carbon-based materials such as carbon black, acetylene black, ketjen black, channel black, furnace black, lamp black, thermal black, and carbon fiber; metal powder or metal fiber such as copper, nickel, aluminum, and silver; conductive whiskers such as zinc oxide and potassium titanate; conductive metal oxides such as titanium oxide; or conductive polymers such as polyphenylene derivatives, or the like, and may be used with one type alone or a mixture of 2 types or more thereof.

In addition, the positive electrode binder serves to improve adhesion between the positive electrode active material particles and adhesion between the positive electrode active material and the positive electrode current collector. As a specific example, the positive electrode binder may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluorine rubber, various copolymers thereof, or the like, and may be used with one type alone or a mixture of 2 types or more thereof.

According to an additional example of the present disclosure, the lithium secondary battery may include a separator between the positive electrode and the negative electrode.

The separator separates the negative electrode and the positive electrode and provides a moving path of lithium ions, and generally, as long as the separator is used as separators in the secondary battery, the separator can be used without any particular limitation, and in particular, it is preferable to have low resistance to ion movement of the electrolyte and to have excellent moisture retention ability in the electrolyte. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure of two or more layers thereof may be used. In addition, a general porous nonwoven fabric, for example, a nonwoven fabric made of high melting point glass fiber, polyethylene terephthalate fiber, etc. may also be used. In addition, in order to secure heat resistance or mechanical strength, a coated separator containing a ceramic component or a polymer material may be used, and may optionally be used in a single-layer or multi-layer structure.

According to an example of the present disclosure, the lithium secondary battery may include an electrolyte.

The electrolyte may include organic liquid electrolytes, inorganic liquid electrolytes, solid polymer electrolytes, gel-type polymer electrolytes, solid inorganic electrolytes, and molten inorganic electrolytes that can be used in manufacturing the lithium secondary battery, but is not limited thereto.

Specifically, the electrolyte may include a non-aqueous organic solvent and a metal salt.

As the non-aqueous organic solvent, aprotic organic solvents may be used, such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, trimester phosphate, trimethoxymethane, dioxolane derivative, sulfolane, methyl sulfolane, 1,3-dimethyl-2-imidazolidinone, propylene carbonate derivatives, tetrahydrofuran derivatives, ether, methyl pyropionate, and ethyl pyropionate.

In particular, among the carbonate-based organic solvents, ethylene carbonate and propylene carbonate, which are cyclic carbonates, are highly viscous organic solvents and may be preferably used due to a high dielectric constant to dissociate lithium salts well. When the cyclic carbonate is mixed and used with linear carbonate having low-viscosity and low-dielectric constant such as dimethyl carbonate and diethyl carbonate in an appropriate ratio, an electrolyte having high electrical conductivity may be prepared, therefore such a combined use may be more preferable.

A lithium salt may be used as the metal salt, and the lithium salt is a material that is easily soluble in the non-aqueous electrolyte, and for example, anions of the lithium salt may be used with one or more selected from the group consisting of F⁻, Cl⁻, I⁻, NO₃⁻, N(CN)₂⁻, BF₄⁻, ClO₄⁻, PF₆-, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In addition to the electrolyte components, the electrolyte may also further include one or more additives of, for example, haloalkylene carbonate-based compounds such as difluoroethylene carbonate, pyridine, triethyl phosphite, triethanolamine, cyclic ether, ethylene diamine, n-glyme, hexamethyl phosphoric acid triamide, nitrobenzene derivatives, sulfur, quinone imine dye, N-substituted oxazolidinone, N,N-substituted imidazolidine, ethylene glycol dialkyl ether, ammonium salt, pyrrole, 2-methoxyethanol or aluminum trichloride, for the purpose of improving life characteristics of the battery, suppressing reduction in battery capacity, improving a battery discharge capacity, and the like.

According to an example of the present disclosure, the lithium secondary battery is a cylindrical battery.

According to an example, the cylindrical battery may mean that the shape of the battery itself including an assembly including a positive electrode, a negative electrode, a separator, and an electrolyte is cylindrical, and may include a cylindrical can, a battery assembly provided inside the cylindrical can, and a top cap.

According to an example of the present disclosure, there is provided a battery module including the lithium secondary battery.

In an example of the present disclosure, there is provided a battery pack including the battery module according to the above-described example.

Another example of the present disclosure provides a battery module including the above-described cylindrical battery as a unit cell and a battery pack including the battery module. Since the battery module and the battery pack include the secondary battery having high capacity, high rate-controlling characteristics and cycle characteristics, the battery module and the battery pack may be used as a power source for a medium-to-large device selected from the group consisting of an electric vehicle, a hybrid electric vehicle, a plug-in hybrid electric vehicle, and a power storage system.

Since the lithium secondary battery according to the examples of the present disclosure stably exhibits excellent discharge capacity, output characteristics and cycle performance, the lithium secondary battery may be used as a power source for a medium-to-large device selected from the group consisting of an electric vehicle, a hybrid electric vehicle, a plug-in hybrid electric vehicle, and a power storage system, as well as portable devices such as a mobile phone, a notebook computer, and a digital camera. For example, the battery module or the battery pack may be used as a power source of one or more medium-to-large devices of power tools; electric vehicles, including electric vehicles (EVs), hybrid electric vehicles, and plug-in hybrid electric vehicles (PHEVs); or a power storage system.

### Mode for carrying out the invention

Hereinafter, preferred Examples of the present disclosure will be provided in order to facilitate understanding of the present disclosure. It will be apparent to those skilled in the art, however, that the following examples are only illustrative of the present disclosure and various changes and modifications can be made within the scope and spirit of the present disclosure, and that these variations and modifications are within the scope of the appended claims.

### <Examples and Comparative Examples>

### Example 1

### Manufacture of negative electrode

A negative electrode composition including a silicon carbon composite; graphite and a negative electrode conductive material was prepared. In the above negative electrode composition, based on 100 parts by weight of the total content of a silicon carbon composite; a graphite; and a negative electrode conductive material, 10 parts by weight of the silicon carbon composite, 89.5 parts by weight of the graphite (artificial graphite:natural graphite = 89:11 weight ratio) and 0.5 parts by weight of single-walled carbon nanotube were included. Based on 100 parts by weight of the negative electrode composition, 1.15 parts by weight of styrenebutadiene rubber (SBR) and 1 part by weight of carboxymethyl cellulose (CMC) as a binder were included. The above negative electrode conductive material was added in the form of a CNT pre-dispersion solution containing 0.09 part by weight of a dispersant and 0.06 part by weight of single-walled CNT based on 100 parts by weight of the negative electrode composition. At this time, the BET specific surface areas of the artificial graphite, the natural graphite and the silicon carbon composite in the composition were prepared as 0.8 m²/g, 1.8 m²/g, and 6.8 m²/g, respectively.

That is, the silicon carbon composite, the graphite, and styrenebutadiene rubber (SBR) and carboxymethyl cellulose (CMC) as the binder were added to and stirred with a single-walled carbon nanotube pre-dispersion solution using distilled water as a dispersion medium and carboxymethyl cellulose (CMC) as a dispersant, and added with distilled water to prepare a negative electrode composition (solid content = 50 parts by weight).

The negative electrode composition was applied to a copper (Cu) metal thin film, which was a negative electrode current collector, having a thickness of 15 µm, and dried. At this time, the temperature of circulating air was 60°C. Then, the negative electrode current collector was roll-pressed and dried in a vacuum oven at 130°C for 12 hours and a negative electrode active material layer was disposed on the negative electrode current collector to manufacture a negative electrode.

At this time, the weight of CMC added as the binder: the weight of CMC added as a dispersant = 1.14:0.06 in the CMC. The average length of single-walled carbon nanotube units in the negative electrode active material layer was 10 µm, and the average diameter was 2 nm.

### Examples 2 to 23

A negative electrode was prepared in the same manner as Example 1, except that BET specific surface areas of artificial graphite, natural graphite, and a silicon carbon composite included in a negative electrode composition, and each weight ratio based on 100 parts by weight of the total content of the silicon carbon composite, graphite and single-walled carbon nanotube in the negative electrode composition were described in Table 1 below.

### Comparative Examples 1 to 6

A negative electrode was prepared in the same manner as Example 1, except that BET specific surface areas of artificial graphite, natural graphite, and a silicon carbon composite included in a negative electrode composition, and each weight ratio based on 100 parts by weight of the total content of the silicon carbon composite, graphite and single-walled carbon nanotube in the negative electrode composition were as described in Table 1 below.

### Reference Examples 1 and 2

A negative electrode was manufactured in the same manner as in Example 1, except that multi-walled carbon nanotube (MWCNT) and carbon black were used instead of the single-walled carbon nanotube (SWCNT) included in the negative electrode composition.

The negative electrodes prepared in Examples and Comparative Examples above are shown in Table 1 below.

**[Table 1]**

| No. | Specific surface area (m²/g) | | | Composition ratio (wt%) (based on total 100 parts by weight of silicon carbon composite; graphite and negative electrode conductive material) | | | |
|---|---|---|---|---|---|---|---|
| | Artifici al graphite | Natural graphite | Silicon carbon composit e | Natural graphite | Artific ial graphit e | Silicon carbon composite | SWCNT conducti ve material |
| Example 1 | 0.8 | 1.8 | 6.8 | 10.5 | 79 | 10 | 0.5 |
| Example 2 | 0.3 | 1.8 | 6.8 | 10.5 | 79 | 10 | 0.5 |
| Example 3 | 1.5 | 1.8 | 6.8 | 10.5 | 79 | 10 | 0.5 |
| Example 4 | 0.8 | 1.5 | 6.8 | 10.5 | 79 | 10 | 0.5 |
| Example 5 | 0.8 | 2.5 | 6.8 | 10.5 | 79 | 10 | 0.5 |
| Example 6 | 0.8 | 1.8 | 3.5 | 10.5 | 79 | 10 | 0.5 |
| Example 7 | 0.8 | 1.8 | 10.0 | 10.5 | 79 | 10 | 0.5 |
| Example 8 | 0.8 | 1.8 | 6.8 | 60.5 | 29 | 10 | 0.5 |
| Example 9 | 0.8 | 1.8 | 6.8 | 15.5 | 79 | 5 | 0.5 |
| Example 10 | 0.8 | 1.8 | 6.8 | 10.95 | 79 | 10 | 0.05 |
| Example 11 | 0.8 | 2.5 | 4.0 | 10.5 | 79 | 10 | 0.5 |
| Example 12 | 0.8 | 2.7 | 3.5 | 10.5 | 79 | 10 | 0.5 |
| Example 13 | 0.8 | 3.5 | 4.3 | 10.5 | 79 | 10 | 0.5 |
| Example 14 | 1.5 | 1.8 | 11.0 | 10.5 | 79 | 10 | 0.5 |
| Example 15 | 1.5 | 1.8 | 3.3 | 10.5 | 79 | 10 | 0.5 |
| Example 16 | 1.6 | 1.8 | 3.5 | 10.5 | 79 | 10 | 0.5 |
| Example 17 | 0.3 | 1.8 | 10.5 | 10.5 | 79 | 10 | 0.5 |
| Example 18 | 1.75 | 1.8 | 6.8 | 10.5 | 79 | 10 | 0.5 |
| Example 19 | 0.8 | 3.3 | 6.8 | 10.5 | 79 | 10 | 0.5 |
| Example 20 | 0.8 | 1.8 | 6.8 | 60.5 | 32 | 7 | 0.5 |
| Example 21 | 0.8 | 1.8 | 6.8 | 34.5 | 50 | 15 | 0.5 |
| Example 22 | 0.8 | 1.8 | 6.8 | 60 | 32 | 7 | 1 |
| Example 23 | 0.8 | 3.6 | 4.2 | 10.5 | 79 | 10 | 0.5 |
| Comparativ e Example 1 | 2.0 | 1.5 | 6.8 | 10.5 | 79 | 10 | 0.5 |
| Comparativ e Example 2 | 2.0 | 3.6 | 3.5 | 10.5 | 79 | 10 | 0.5 |
| Comparativ e Example 3 | 2.0 | 1.5 | 6.8 | 60.5 | 29 | 10 | 0.5 |
| Comparativ e Example 4 | 2.0 | 1.5 | 6.8 | 15.5 | 79 | 5 | 0.5 |
| Comparativ e Example 5 | 2.0 | 1.5 | 6.8 | 10.95 | 79 | 10 | 0.05 |
| Comparativ e Example 6 | 2.3 | 1.8 | 6.8 | 10.5 | 79 | 10 | 0.5 |
| Reference Example 1 | 0.8 | 1.8 | 6.8 | 10.5 | 79 | 10 | MWCNT applicat ion 0.5 |
| Reference Example 2 | 0.8 | 1.8 | 6.8 | 10.5 | 79 | 10 | Carbon black applicat ion 0.5 |

The pore volumes of the materials used in Examples 1 and 23 and Comparative Examples 1, 2 and 6 are shown in Table 2 below.

**[Table 2]**

| No. | Specific surface area (m²/g) | | | pore volume (cm³/g) | | | Composition ratio (wt%) (based on total 100 parts by weight of silicon carbon composite; graphite and negative electrode conductive material) | | | |
|---|---|---|---|---|---|---|---|---|---|---|
| | artif icial graphite | natur al graph ite | silic on carbo n compo site | artif icial graphite | natur al graphite | silic on carbo n composite | natur al graphite | artif icial graphite | silic on carbo n compo site | SWCNT (cond uctiv e material) |
| Examp le 1 | 0.8 | 1.8 | 6.8 | 2 | 4 | 7 | 10.5 | 79 | 10 | 0.5 |
| Examp le 23 | 0.8 | 3.6 | 4.2 | 2 | 6 | 5 | 10.5 | 79 | 10 | 0.5 |
| Compa rativ e Examp le 1 | 2.0 | 1.5 | 6.8 | 4 | 2 | 7 | 10.5 | 79 | 10 | 0.5 |
| Compa rativ e Examp le 2 | 2.0 | 3.6 | 3.5 | 2 | 7 | 4 | 10.5 | 79 | 10 | 0.5 |
| Compa rativ e Examp le 6 | 2.3 | 1.8 | 6.8 | 5 | 4 | 7 | 10.5 | 79 | 10 | 0.5 |

The specific surface area was measured by degassing at 130°C for 2 hours using a BET measuring device (BEL-SORP-mini, Nippon Bell) and performing N₂ adsorption/desorption at 77 K.

For the pore volume, an N₂ adsorption/desorption isotherm graph was derived using a BELSORP-mini II model of BEL Japan, and the volume of a place having the highest P/P₀ (close to 1) in adsorption was used as a representative.

### Experimental Example

A negative electrode and a lithium secondary battery including the same were prepared by using the negative electrode active materials of Examples and Comparative Examples, respectively.

### Evaluation of life (capacity retention rate) characteristic

By performing charging and discharging on the prepared battery, the capacity retention rate was evaluated, which was shown in Table 3 below.

At 1^{st} and 2^{nd} cycles, charging and discharging were performed at 0.1 C, and from third cycle, the charging and discharging were performed at 0.5 C. 300^{th} cycle was terminated in the charged state (the state in which lithium was included in the negative electrode).

Charging condition: CC (constant current)/CV (constant voltage) (4.25 V/0.05 C current cut-off)

Discharging condition: CC (constant current) condition 2.5 V

The capacity retention rate was derived by the following Equation, respectively. Capacity retention rate (%) = (100th discharge capacity/1st discharge capacity) × 100

Table 3 below described values for energy densities (based on Example 1, %) and capacity retention rates (300^{th} cycle, %) of Examples 1 to 19, Comparative Examples 1 to 4, and Reference Examples 1 and 2.

### Evaluation of Li-plating time point

A lithium (Li) metal thin film cut into a circular shape of 1.4875 cm² was used as a positive electrode. A separator made of porous polyethylene was interposed between the positive electrode and the negative electrode, and an electrolyte was injected to prepare a lithium coin half-cell, wherein the electrolyte was prepared as follows: vinylene carbonate in 0.5 part by weight was dissolved into a mixed solution having a mixing volume ratio of methyl ethyl carbonate (EMC) and ethylene carbonate (EC) of 7:3,1 M concentration of LiPF₆ was further dissolved into the mixed solution.

After one cycle of charging and discharging was completed, a Li-plating time point was measured under a 1.8 C charging condition.

Charging condition: CC (constant current)/CV (constant voltage) (5 mV/0.005 C current cut-off)

Discharging condition: CC (constant current) condition 1.5 V

### Evaluation of electrode adhesion

For each of the prepared negative electrodes, the negative electrode was punched out to sizes of 20 mm × 150 mm and fixed to the center of slide glass using a tape, and then a negative electrode current collector was peeled using UTM, and 180° peel strength was measured. The evaluation was determined as an average value by measuring the peel strengths of 5 or more. The result was shown in Table 3 below.

**[Table 3]**

| | Life (300^{th} cycle %) | Li plating time point (1.8 C, SOC %) | Electrode adhesion (gf cm) |
|---|---|---|---|
| Example 1 | 96 | 84 | 54 |
| Example 2 | 97 | 83 | 54 |
| Example 3 | 95 | 83 | 53 |
| Example 4 | 96 | 84 | 54 |
| Example 5 | 95 | 84 | 54 |
| Example 6 | 96 | 84 | 53 |
| Example 7 | 96 | 84 | 55 |
| Example 8 | 94 | 81 | 54 |
| Example 9 | 97 | 82 | 55 |
| Example 10 | 95 | 84 | 54 |
| Example 11 | 96 | 83 | 84 |
| Example 12 | 93 | 82 | 53 |
| Example 13 | 93 | 82 | 53 |
| Example 14 | 92 | 81 | 52 |
| Example 15 | 92 | 82 | 52 |
| Example 16 | 91 | 82 | 52 |
| Example 17 | 93 | 81 | 52 |
| Example 18 | 90 | 82 | 52 |
| Example 19 | 92 | 81 | 52 |
| Example 20 | 94 | 80 | 54 |
| Example 21 | 91 | 84 | 52 |
| Example 22 | 95 | 80 | 54 |
| Example 23 | 95 | 83 | 53 |
| Comparative Example 1 | 84 | 79 | 48 |
| Comparative Example 2 | 81 | 78 | 49 |
| Comparative Example 3 | 81 | 75 | 50 |
| Comparative Example 4 | 84 | 76 | 47 |
| Comparative Example 5 | 83 | 79 | 48 |
| Comparative Example 6 | 82 | 78 | 48 |
| Reference Example 1 | 87 | 79 | 50 |
| Reference Example 2 | 81 | 78 | 48 |

The negative electrode composition according to the present disclosure included a silicon carbon composite; graphite and a negative electrode conductive material, the graphite included natural graphite and artificial graphite, and the BET specific surface area of the silicon carbon composite was larger than a BET specific surface area of the natural graphite, and the BET specific surface area of the natural graphite was larger than a BET specific surface area of the artificial graphite. In the negative electrode composition, since a silicon-based active material, which is a high-capacity material, is used to manufacture a high-capacity battery to satisfy a correlation between the BET specific surface areas of the silicon carbon composite, the natural graphite and the artificial graphite, it is possible to improve the life reduction of conventional secondary batteries, enable rapid charging, and have excellent electrode adhesion. From Table 3, it can be seen that the Li plating time point of the Example appears at a higher SOC% than the Comparative Example, which means that lithium is deposited later during charging. It can be seen that rapid charging performance is excellent because lithium is deposited more slowly during charging.

In addition, the silicon carbon composite, the graphite, and single-walled carbon nanotube (SWCNT) as the conductive material included in the negative electrode composition described above are used together to improve a conductive path between negative electrode active material particles, thereby improving the capacity, efficiency, and life performance of the battery.

The natural graphite has a BET specific surface area of 1.5 m²/g or more and 3.5 m²/g or less, which may improve electrode adhesion. The artificial graphite and the silicon carbon composite affect rapid charging and life performance, and the BET specific surface areas thereof are 0.1 m²/g or more and 2.5 m²/g or less, and 3 m²/g or more and 15 m²/g or less, respectively.

When the artificial graphite has a larger BET specific surface area than that of the natural graphite, a large amount of binder in the electrode is consumed when the electrode is manufactured with the negative electrode composition, thereby reducing electrode adhesion. In addition, when the BET specific surface area of the silicon carbon composite is smaller than the BET specific surface area of the natural graphite, intercalation and/or deintercalation of lithium in the silicon carbon composite becomes difficult, so that life performance and rapid charging performance may be deteriorated.

Examples 1 to 23 used a negative electrode composition that satisfied a particular specific surface area ratio, so that it can be seen that the life performance, rapid charging, and electrode adhesion were all excellent.

On the other hand, Comparative Examples 1 and 3 to 6 did not satisfy the particular specific surface area ratio of the negative electrode composition used in the present disclosure, and thus, since the artificial graphite has a higher BET specific surface area than the natural graphite, a large amount of binder in the electrode is consumed when an electrode is manufactured with the negative electrode composition, so that electrode adhesion may be reduced, and thus life performance may be reduced.

Comparative Example 2 did not satisfy the particular specific surface area ratio of the negative electrode composition used in the present disclosure, and since the BET specific surface area of the silicon carbon composite is smaller than the BET specific surface area of the natural graphite, intercalation and/or deintercalation of lithium in the silicon carbon composite may be difficult, so that the life performance and rapid charging performance may be deteriorated.

Reference Examples 1 and 2 used multi-walled carbon nanotube (MWCNT) and carbon black instead of single-walled carbon nanotube (SWCNT) as the negative electrode conductive material used in the present disclosure to affect the life performance, rapid charging performance and electrode adhesion of the battery.

## Claims

1. A negative electrode composition comprising:
a silicon carbon composite;
a graphite; and
a negative electrode conductive material,
wherein a BET specific surface area of the silicon carbon composite is larger than a BET specific surface area of the graphite.

2. The negative electrode composition of claim 1, wherein the graphite includes at least one of a natural graphite and an artificial graphite, and
wherein a BET specific surface area of the natural graphite is larger than a BET specific surface area of the artificial graphite when the graphite includes both the natural graphite and the artificial graphite.

3. The negative electrode composition of claim 2, wherein the graphite includes the natural graphite, and the BET specific surface area of the silicon carbon composite is greater than the BET specific surface area of the natural graphite by 1 m²/g to 9 m²/g.

4. The negative electrode composition of claim 2, wherein the graphite includes the artificial graphite, and the BET specific surface area of the silicon carbon composite is greater than the BET specific surface area of the artificial graphite by 2 m²/g to 10 m²/g.

5. The negative electrode composition of claim 2, wherein the graphite includes both the natural graphite and the artificial graphite, and the BET specific surface area of the natural graphite is greater than the BET specific surface area of the artificial graphite by 0.1 m²/g to 2 m²/g.

6. The negative electrode composition of claim 2, wherein the graphite includes both the natural graphite and the artificial graphite, and a pore volume of the silicon carbon composite is equal to or larger than a pore volume of the natural graphite, and the pore volume of the natural graphite is equal to or larger than a pore volume of the artificial graphite.

7. The negative electrode composition of claim 2, wherein the graphite includes both the natural graphite and the artificial graphite, and the natural graphite has a BET specific surface area of 1.5 m²/g or more and 3.5 m²/g or less, and the artificial graphite has a BET specific surface area of 0.1 m²/g or more and 2.5 m²/g or less.

8. The negative electrode composition of claim 1, wherein the negative electrode conductive material includes single-walled carbon nanotube (SWCNT),
wherein, based on 100 parts by weight of the total content of the silicon carbon composite, the graphite, and the single-walled carbon nanotube in the negative electrode composition, the silicon carbon composite is included in an amount of 0.5 part by weight to 50 parts by weight; the graphite is included in an amount of 45 parts by weight to 99 parts by weight; and the single-walled carbon nanotube (SWCNT) is included in an amount of 0.01 part by weight to 5 parts by weight.

9. The negative electrode composition of claim 2, wherein the graphite includes both the natural graphite and the artificial graphite, and
wherein, based on 100 parts by weight of the graphite, the natural graphite is included in an amount of 10 parts by weight to 70 parts by weight; and the artificial graphite is included in an amount of 30 parts by weight to 90 parts by weight.

10. The negative electrode composition of claim 1, wherein the negative electrode composition further comprises a binder.

11. A method for preparing a negative electrode composition comprising:
forming a first mixture by mixing water with a negative electrode conductive material; and
forming a second mixture by mixing a silicon carbon composite and a graphite with the first mixture,
wherein a BET specific surface area of the silicon carbon composite is larger than a BET specific surface area of the graphite.

12. The method for preparing a negative electrode composition of claim 11, wherein the graphite includes at least one of a natural graphite and an artificial graphite, and
wherein a BET specific surface area of the natural graphite is larger than a BET specific surface area of the artificial graphite when the graphite includes both the natural graphite and the artificial graphite.

13. The method for preparing the negative electrode composition of claim 11, wherein the negative electrode conductive material includes single-walled carbon nanotube (SWCNT),
wherein, based on 100 parts by weight of the total content of the silicon carbon composite, the graphite, and the single-walled carbon nanotube in the negative electrode composition, the silicon carbon composite is included in an amount of 0.5 part by weight to 50 parts by weight; the graphite is included in an amount of 45 parts by weight to 99 parts by weight; and the single-walled carbon nanotube (SWCNT) is included in an amount of 0.01 part by weight to 5 parts by weight.

14. The method for preparing the negative electrode composition of claim 12, wherein the graphite includes both the natural graphite and the artificial graphite, and the graphite comprises the natural graphite in an amount of 10 parts by weight to 70 parts by weight; and the artificial graphite in an amount of 30 parts by weight to 90 parts by weight, based on 100 parts by weight of the graphite.

15. The method for preparing the negative electrode composition of claim 12, wherein the graphite includes the natural graphite, and the BET specific surface area of the silicon carbon composite is greater than the BET specific surface area of the natural graphite by 1 m²/g to 9 m²/g.

16. The method for preparing the negative electrode composition of claim 12, wherein the graphite includes the artificial graphite, and the BET specific surface area of the silicon carbon composite is greater than the BET specific surface area of the artificial graphite by 2 m²/g to 10 m²/g.

17. The method for preparing the negative electrode composition of claim 12, wherein the graphite includes both the natural graphite and the artificial graphite, and the BET specific surface area of the natural graphite is greater than the BET specific surface area of the artificial graphite by 0.1 m²/g to 2 m²/g.

18. A negative electrode for a lithium secondary battery, the negative electrode comprising:
a current collector; and
a negative electrode active material layer formed on one surface or both surfaces of the current collector and including the negative electrode composition of any one of claims 1 to 10.

19. A lithium secondary battery comprising:
a positive electrode;
the negative electrode for a lithium secondary battery according to claim 18; and
a separator between the positive electrode and the negative electrode.

20. The lithium secondary battery of claim 19, wherein the lithium secondary battery is a cylindrical battery.
